# EUROPEAN PATENT SPECIFICATION

(11) **EP 4 064 536 B1**
(45) Date of publication and mention of the grant of the patent: **16.10.2024**
(21) Application number: 21810517.9
(22) Date of filing: 28.01.2021
(51) Int. Cl.: H02M 1/36, H02J 7/06, B60L 53/10, B60L 53/22, B60L 53/31, B60L 53/20, B60L 53/30

(54) **POWER SUPPLY CONTROL METHOD FOR POWER CONVERSION DEVICE, AND POWER CONVERSION DEVICE**
ENERGIEVERSORGUNGS-STEUERVERFAHREN FÜR LEISTUNGSUMWANDLUNGSVORRICHTUNG UND LEISTUNGSUMWANDLUNGSVORRICHTUNG
PROCÉDÉ DE COMMANDE D'ALIMENTATION ÉLECTRIQUE POUR DISPOSITIF DE CONVERSION DE PUISSANCE, ET DISPOSITIF DE CONVERSION DE PUISSANCE

(43) Date of publication of application: 28.09.2022
(73) Proprietor: Contemporary Amperex Technology (Hong Kong) Limited, Central, Central And Western District (HK)
(72) Inventor: LI, Zhanliang, Ningde, Fujian 352100 (CN); YAN, Yu, Ningde, Fujian 352100 (CN); XIONG, Shuyun, Ningde, Fujian 352100 (CN); SUN, Weiping, Ningde, Fujian 352100 (CN); DAN, Zhimin, Ningde, Fujian 352100 (CN)
(74) Representative: Herrero & Asociados, S.L.
(86) International application number: PCT/CN2021/074179
(87) International publication number: WO 2022/160187

(56) References cited:
- CN-A- 102 780 249
- CN-A- 103 117 585
- CN-A- 107 264 308
- CN-A- 107 317 365
- CN-U- 207 368 734
- US-A1- 2017 126 028

## Description

### TECHNICAL FIELD

Embodiments of the present application relate to the field of charging, and more specifically, relate to a power supply control method of a power conversion apparatus and a power conversion apparatus.

### BACKGROUND

With the development of the times, an electric vehicle, due to its advantages such as high environmental protection, low noise, low use cost, has a huge market prospect and can effectively promote energy conservation and pollution reduction, which is beneficial to social development and progress.

In a low temperature environment below zero Celsius degree, due to the electrochemical characteristics of the battery in the hybrid electrical vehicle, a direct current charging may cause a risk of lithium plating to the battery, thus the charging capacity of a traditional lithium battery pack is greatly limited, even unable to be charged, and the charging time is too long, which seriously affects the customer's experience driving in the winter.

Therefore, the present application introduces a power conversion apparatus which is used for a power conversion between the charging pile and the power battery, but as to how to provide the power supply for the power conversion apparatus, there is no a clear solution at present.

CN107317365A discloses a charging device, a charging method and a vehicle. The charging device disclosed by the invention comprises a battery interface, a charging interface and a DC/DC converter, wherein the battery interface is electrically coupled to a battery of the vehicle, the charging interface is electrically coupled to a power supply interface of a DC charging station and is used for receiving an input current of the DC charging station, and the DC/DC converter is used for increasing the input current received by the charging interface to obtain an output current and providing the output current for the battery through the battery interface so as to charge the battery.

### SUMMARY

The invention is set out in the appended set of claims.

### BRIEF DESCRIPTION OF DRAWINGS

In order to more clearly illustrate the technical solution of embodiments of the present application, the accompanying figures required in embodiments of the present application will be briefly introduced, obviously, the accompanying drawings described below are merely some embodiments of the present application, for those of the ordinary skill in the art, they can also obtain other accompanying drawings from the accompanying drawing without paying a creative work.
FIG. 1 is schematic block diagram of a power conversion apparatus.
FIG. 2 is a schematic block diagram of a power supply control method for a power conversion apparatus provided by embodiments of the present application.
FIG. 3 is a schematic block diagram of a power conversion apparatus provided by embodiments of the present application.
FIG. 4 is another schematic block diagram of a power conversion apparatus provided by embodiments of the present application.
FIG. 5 is a schematic block diagram of a power supply control system provided by embodiments of the present application.
FIG. 6 is another schematic block diagram of a conversion apparatus provided by embodiments of the present application.

### DESCRIPTION OF EMBODIMENTS

The technical solution of the present application embodiment will be described in conjunction with the accompanying drawings below.

A power battery is a battery for providing a power source for the power consumption device. Optionally, the power battery may be a power storage battery. For the type of the battery, the power battery can be a lithium-ion battery, a lithium metal battery, a lead-acid battery, a nickel-cadmium battery, a nickel-metal hydride battery, a lithium-sulfur battery, a lithium-air battery or a sodium-ion battery etc., embodiments of the present application have no specific limit. For the battery size, the power battery in the present application embodiment can be a battery core, it can also be a battery module or a battery pack, embodiments of the present application have no specific limit. Optionally, the power consumption device may be a vehicle, a ship or a spacecraft etc., and embodiments of the present application have no limit on this. A battery management system (BMS) of the power battery is a control system which protects the use safety of the power battery, implementing a charging and discharging management, high voltage control, battery protection, battery data collection, battery state evaluation etc.

A charging pile, also known as charger, is a device for charging the power battery. The charging pile can output a charging power in accordance with charging demand of the BMS, to charge the power battery. For example, the charging pile can output a voltage and a current in accordance with a demand voltage and a demand current sent by BMS.

However, in some special cases, the range of voltage and current output by the charging pile is unable match with the power battery. For example, in a low temperature scenario, a minimum voltage or current output by the charging pile may also cause a lithium plating during the charging, the power battery cannot be normally charged. In addition, in some cases, a conversion of power form may be required between the charging pile and the power battery, for example: voltage change, current change, power state change, current, voltage, power timing change, etc.

In view of the above situation, embodiments of the present application introduce a power conversion apparatus between the charging pile and the power battery, the power conversion apparatus can conduct a power conversion between the charging pile and the power battery. If it is required to conduct a power conversion between the charging pile and the power battery, the power conversion apparatus converts the power type output by the charging pile into power type required by the power battery. For example, the power conversion apparatus can convert a direct current power output by the charging pile into a pulse power, or, change the voltage value, change current value, or change timing of voltage and current, etc.

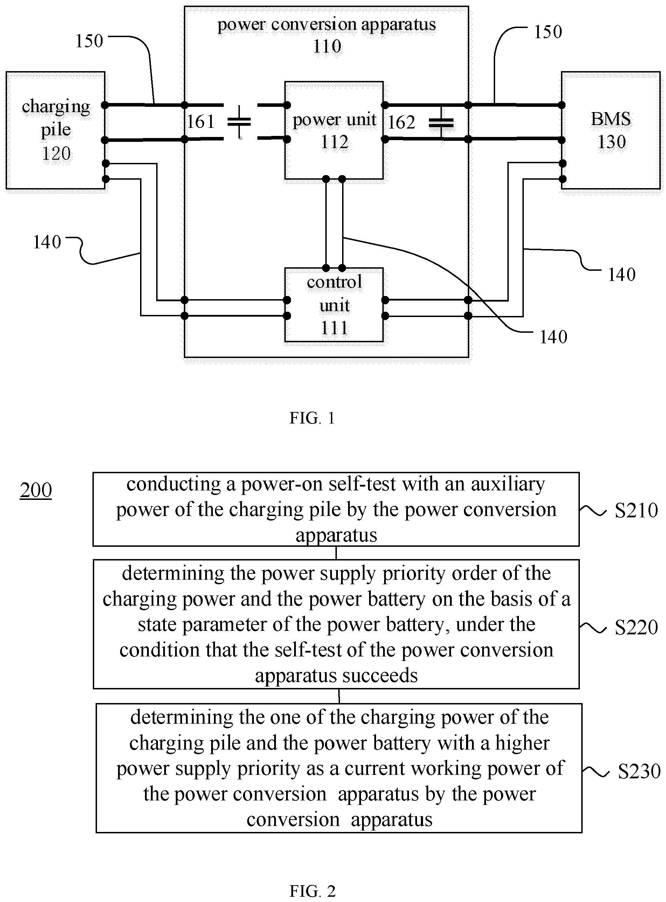

FIG. 1 is a schematic diagram of an application framework of a power conversion apparatus according to embodiments of the present application. As shown in FIG. 1, the power conversion apparatus 110 is provided between the charging pile 120 and the BMS of the power battery, namely, power conversion apparatus 110 is connected with the charging pile 120 and the BMS 130 respectively, and the charging pile 120 is not directly connected with the BMS 130.

In the case that the power conversion apparatus 110 is not provided, when the power battery is charged, the charging pile 120 is directly connected with the BMS 130, then the charging process is started, to charge the power battery. As mentioned above, in some cases, the charging pile 120 may be unable to directly normally charge the power battery. Therefore, in embodiments of the present application, a power conversion apparatus 110 is added, and power conversion is conducted between the charging pile 120 and the power battery.

Optionally, the power conversion apparatus 110 can include a control unit 111 and a power unit 112. The control unit 111 is responsible for detecting the states of the charging pile 120 and the BMS 130 during the charging; the control unit 111 is respectively connected to the charging pile 120 and the BMS 130 via a communication line 140, to conduct an information interaction respectively with the charging pile 120 and the BMS 130. In addition, the control unit 111 is also connected with the power unit 112 via the communication line 140, to conduct an information interaction with the power unit 112 and control the power unit 112 to conduct the power conversion. For example, the communication line 140 may be a communication line for controller area network (CAN).

The power unit 112 is responsible for converting the power type output by the charging pile 120 into the power type required by the power battery, on the basis of instruction from the control unit 111. The power unit 112 is connected with the control unit 111 via the communication line 140 to conduct the information interaction. A communication protocol can be configured between the control unit 111 and the power unit 112, for example, syntax, semantics and timing which define the communication, etc., to ensure the normal interaction between the control unit 111 and the power unit 112.

A control strategy can be configured on the control unit 111. For example, the control unit 111 determines a state of the present charging process by parsing the charging message between the charging pile 120 and the BMS 130, to control the corresponding operation conducted by the power unit 112. For example, when the pre-charging condition is met, power unit 112 is controlled to conduct a pre-charging operation. Meanwhile the control unit 111 communicates with the power unit 112, and acquires the state of the power unit 112, to execute the corresponding operation. For example, when the power unit 112 reports a failure, the control unit 111 timely sends a stop pre-charging command.

The power unit 112 is respectively connected with the charging pile 120 and the BMS 130 via a high voltage line 150, to convert the charging power output by the charging pile 120 via the high voltage line150 and then output to the BMS to charge the power battery.

Optionally, there are capacitors with high capacity in the power conversion apparatus 110, for example, a first capacitor 161 and a second capacitor 162.

Optionally, in embodiments of the present application, the battery pack managed by the BMS 130 can be called as the power battery.

Optionally, the power conversion apparatus can be integrated into the charging pile or the hybrid electrical vehicle, it can also be an independent apparatus. If the power conversion apparatus is integrated into the charging pile or the hybrid electrical vehicle, the charging pile or power battery can conduct a power supply to the power conversion apparatus. If the power conversion apparatus is an independent apparatus, the power conversion apparatus can obtain the electricity by a traditional method namely via a standard grid (namely, municipal electricity provided by the government) or an external direct current power, or, the power conversion apparatus can also obtain electricity via an auxiliary power or charging power of the charging pile, or a power battery, in case that it is respectively connected with the charging pile and the power battery. The external direct current power in embodiments of the present application should include but not limited to devices such as portable charger etc.

That is to say, in embodiments of the present application, when the power conversion apparatus can obtain multiple powers, one power can be chosen from the multiple powers as the working power of the power conversion apparatus.

In a possible embodiment, the power supply priority of the multiple powers can be set in advance, in case that the power conversion apparatus obtains the multiple powers, and one power can be chosen from the multiple powers as the working power of the power conversion apparatus based on the preset power supply priority.

It should be noted that, the standard grid is of alternating current electricity, the charging power and the power battery are of high voltage electricity, and the working power of the power conversion apparatus is of low voltage and direct current, thus, before providing the power supply for the power conversion apparatus, it is required to convert the one chosen power supply into the working power of the power conversion apparatus.

Embodiments of the present application are mainly based on in case that the power conversion apparatus with the charging pile and the power battery are respectively connected, how to provide the power supply for the power conversion apparatus. Specifically, as shown in FIG. 2, the method 200 includes a portion or all of the following steps:
S210, conducting a power-on self-test with an auxiliary power of a charging pile by the power conversion apparatus;
S220, determining the power supply priority order of the charging power and the power battery on the basis of a state parameter of the power battery, under the condition that the self-test of the power conversion apparatus succeeds;
S230, determining the one of the charging power of the charging pile and the power battery with a higher power supply priority as the current working power of the power conversion apparatus by the power conversion apparatus.

Specifically, if the power conversion apparatus is in the normal working mode, namely, a working mode in which the power conversion apparatus, the charging pile and the power battery are interconnected, the auxiliary power of the charging pile may first output, at this moment because the high voltage system is not power-on, but the power conversion apparatus needs a self-test and communicating with the charging pile and the BMS managing the power battery, thus, at this moment the power-on self-test can be conducted by using the auxiliary power of the charging pile, after the self-test succeeds and the high voltage system is power-on, the power supply can be provided for the power conversion apparatus by using the charging power of the charging pile or the power battery. Further, the one of the charging power and power battery with the higher priority can be regarded as the working power of the power conversion apparatus, on the basis of the preset power supply priority.

Usually, when the gun head and the gun base of the charging pile, the power conversion apparatus and the power battery are interconnected, the charging pile can be aware of the connection success information, the auxiliary power of the charging pile starts to output, correspondingly, the power conversion apparatus can acquire the auxiliary power. Optionally, after the charging pile is aware of the connection success information, it can also send the connection success information to the power conversion apparatus, correspondingly, after the power conversion apparatus receives the connection success information sent by the charging pile, it can acquire the auxiliary power.

When the power conversion apparatus conducts the self-test by using the auxiliary power, meanwhile the power conversion apparatus respectively communicates with the charging pile and the BMS, after the self-test of the power conversion apparatus succeeds and information interaction is conducted with the charging pile and the BMS, the charging pile and the BMS can respectively close the switch at the high voltage side, namely, the charging power of the charging pile outputs, power battery outputs. When the power conversion apparatus not only acquires the charging power, but also acquires the power battery, the power conversion apparatus can also determine the working power of the power conversion apparatus on the basis of preset power supply priority. In other words, when the priority of the power battery is higher than that of the charging battery, the working power of the power conversion apparatus is switched from the auxiliary power to the power battery; when the priority of the charging battery is higher than that of the power battery, the working power of the power conversion apparatus is switched from the auxiliary power to the charging power.

Optionally, in embodiments of the present application, before determining the working power of the power conversion apparatus, the power supply priority order of the charging power and the power battery can be first determined.

Optionally, the power supply priority order of the charging power and the power battery can be determined by some state parameters of the charging power and the power battery. For example, the power supply priority order of the charging power and the power battery can be determined by electric quantity of the power battery. For another example, the power supply priority order of the charging power and the power battery can be determined on the basis of the temperature of the power battery. For another example, the power supply priority order of the charging power and the power battery can be determined on the basis of state of charge (State of Charge, SOC) or voltage of the power battery. Embodiments of the present application have no limit on the state parameter for determining the power supply priority order of the charging power and the power battery.

The power supply priority order of the charging power and the power battery is determined on the basis of the electric quantity of the power battery, specifically, the power supply priority order of the two can be determined on the basis of a preset first threshold. For example, when the electric quantity of the power battery is higher than the first threshold, it is believed that the power battery is sufficient to provide a stable power for the power conversion apparatus, namely it is determined that the power supply priority of the power battery is higher than the power supply priority of the charging power. When the electric quantity of the power battery is less than or equal to the first threshold, it is believed that the power battery is insufficient to provide a table power for the power conversion apparatus, namely, it is determined that the power supply priority of the power battery is less than the power supply priority of the charging power.

Optionally, the power supply priority order of the charging power and the power battery can also be determined on the basis of the temperature of the power battery. Specifically, the power supply priority order of the two can be determined on the basis of a preset second threshold. For example, when the temperature of the power battery is higher than the second threshold, it is believed that the power battery is sufficient to provide stable power for the power conversion apparatus, namely, it is determined that the power supply priority of the power battery is higher than the power supply priority of the charging power. When the temperature of the power battery is less than or equal to the second threshold, it is believed that the power battery is insufficient to provide a stable power for the power conversion apparatus, namely, it is determined that the power supply priority of the power battery is less than the power supply priority of charging power.

It should be noted that, various thresholds in embodiments of the present application, such as the first threshold, the second threshold etc., all can be obtained by experience. In other words, they are obtained by a lot of experiments. It can be believed that, the first threshold or the second threshold is a critical value which can provide a table power for the power conversion apparatus.

Alternatively, it is defaulted that the power supply priority of the power battery is higher than the power supply priority of the charging power, namely, the power conversion apparatus directly regards the power battery as its working power.

The power supply priority order of the above-mentioned each power can also be preset in advance, and stored inside the power conversion apparatus. For example, the power supply priority order of a standard grid 1, an external direct current power 2, an auxiliary power 3, a charging power 4 and a power battery 5 be in advance preset as: 5>4>2>1>3. For another example, the priority order can be: 5>2>4>1>3.

In order to avoid the impact of the output power difference of the auxiliary power of different charging piles on the power supply of the power conversion apparatus, in embodiments of the present application, the power supply priority of the auxiliary power can be set as the lowest.

Optionally, in embodiments of the present application, when the power conversion apparatus acquires multiple powers, the multiple powers can first be converted into the working power of the power conversion apparatus, then one is chosen to provide the power supply for the power conversion apparatus. Or one power can also be chosen from the multiple powers first, and then be converted into the working power of the power conversion apparatus to provide a power supply for it.

When the power conversion apparatus is in an off-line debugging mode, in other words, the power conversion apparatus is in course of development and maintaining, namely, the power conversion apparatus is not connected with the charging pile or the power battery, a standard grid or an external direct current power can provide the power supply for the power conversion apparatus. When it is required to provide a power supply for the power conversion apparatus by using the standard grid, the standard grid can be first converted into a direct current.

Optionally, in embodiments of the present application, the power supply can be provided directly to the power conversion apparatus by the standard grid, thereby reducing the complexity of the system power supply strategy.

Optionally, in embodiments of the present application, when the power conversion apparatus can acquire multiple powers, the working power of the power conversion apparatus can also be switched among the multiple powers. Specifically, the working power of the power conversion apparatus can be switched from the power with a lower power supply priority to the power with a higher power supply priority.

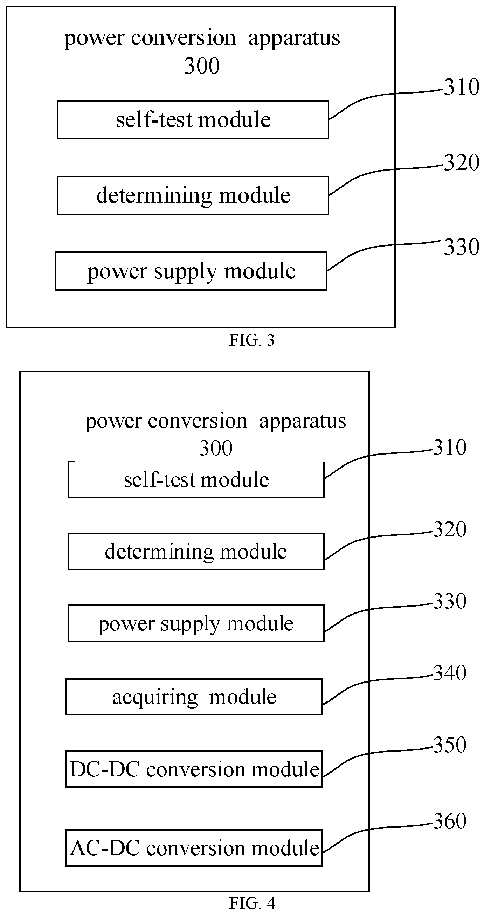

The power supply control method for the power conversion apparatus of embodiments of the present application has been described in detail above, the power supply control device of the present application embodiment will be described in detail in conjunction with FIG. 3 and FIG. 4 below. The technical features described in the method embodiment apply in the following device embodiment.

FIG. 3 shows a schematic block diagram of a power conversion apparatus 300 of embodiments of the present application. As shown in FIG. 3, the power conversion apparatus 300 includes:
A self-test module 310, configured to conduct the power-on self-test by using an auxiliary power of the charging pile;
A determining module 320, configured to determine the power supply priority order of the charging power and the power battery on the basis of a state parameter of the power battery, under the condition that the self-test of the power conversion apparatus succeeds;
A power supply module 330, configured to determine the one of the charging power of the charging pile and the power battery with a higher power supply priority as a current working power of the power conversion apparatus.

It should be noted that, the power output by the power supply module 330 can meet the demand of different vehicle types, a boosting or step-down circuit can also integrated into the power conversion apparatus, to realize the match with the charging pile and the power battery.

The power supply control device which is the power conversion apparatus of embodiments of the present application can be integrated in the power conversion apparatus, namely, the power supply control device is the power conversion apparatus, it can also be independent of the power conversion apparatus, and separately provides the working power for the power conversion apparatus.

Optionally, in embodiments of the present application, the determining module 320 is specifically configured to: determine the power supply priority order of the charging power and the power battery, on the basis of electric quantity of the power battery.

Optionally, in embodiments of the present application, the determining module 320 is specifically configured to: determine that the power supply priority of the power battery is higher than the power supply priority of the charging power, under the condition that the electric quantity of the power battery is higher than a first threshold; or, determine that the power supply priority of the power battery is less than the power supply priority of the charging power, under the condition that the electric quantity of the power battery is less than or equal to the first threshold.

Optionally, as shown in FIG. 4, the power conversion apparatus 300 also includes: an acquiring module 340, configured to: acquire the auxiliary power when determining the power conversion apparatus is in a normal working mode, the normal working mode is a working mode in which the charging pile, the power conversion apparatus and the power battery are interconnected.

Optionally, in embodiments of the present application, the acquiring module 340 is specifically configured to: acquire the auxiliary power when receiving a connection success information sent by the charging pile.

Optionally, as shown in FIG. 4, the power conversion apparatus 300 also includes: a direct current to direct current (DC-DC) module 350, configured to: convert the charging power and/or the power battery into a working power of the power conversion apparatus before the power conversion apparatus determines the one of the charging power of the charging pile and the power battery with a higher power supply priority as the current working power of the power conversion apparatus.

Optionally, the power conversion apparatus 300 can include one DC-DC module 350, in other words, the charging power and the power battery can share one DC-DC module 350; the power conversion apparatus 300 can also include two DC-DC modules 250, in other words, the charging power and the power battery respectively use one DC-DC module 350.

Optionally, in embodiments of the present application, the power supply module 330 is also configured to: in an off-line debugging mode of the power conversion apparatus, determine a standard grid or an external direct current power as the current working power of the power conversion apparatus.

Optionally, as shown in FIG. 4, the power conversion apparatus 300 also includes:
An alternating current to direct current (AC-DC) module 360, configured to convert the standard grid into the working power of the power conversion apparatus before the power conversion apparatus determines the standard grid as the working power of the power conversion apparatus.

Optionally, in embodiments of the present application, the power conversion apparatus 300 is configured to convert a direct current output by the charging power into a pulse current and charge to the power battery.

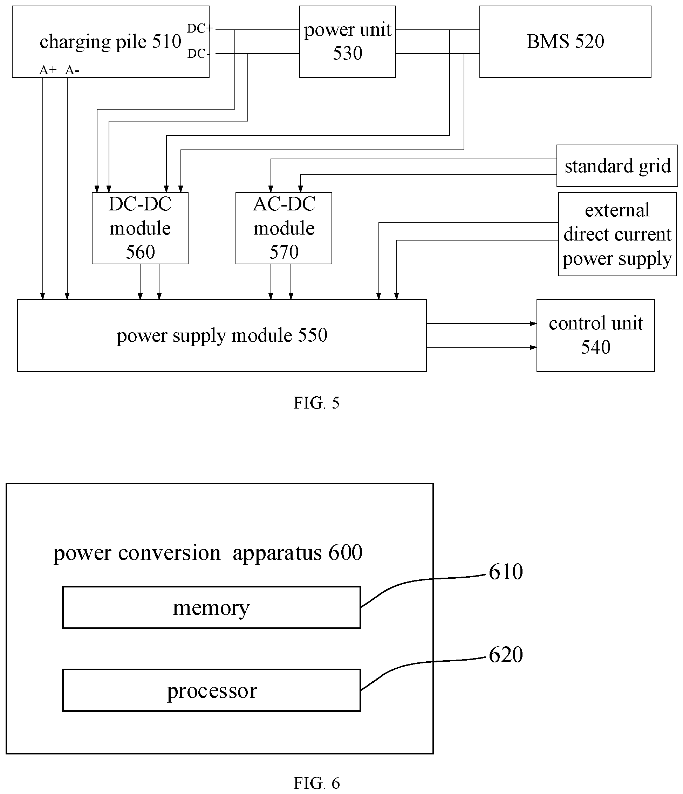

FIG. 5 shows a schematic block diagram of a power supply control system, as shown in FIG. 5, the power supply control system includes a charging pile 510, a BMS 520, a power unit 50, a control unit 540, a power supply module 550, a DC-DC module 560 and a AC-DC module 570, where, the power unit 530 and the control unit 540 constitute a power conversion apparatus, optionally, the power supply module 550, the DC-DC module 560 and the AC-DC module 570 can also be integrated into the power conversion apparatus. In can be seen from FIG. 5, the standard grid after being converted by AC-DC module 570 is output by the power supply module 350, and the auxiliary power A+/A- and external direct current power are directly output by the power supply module 550, the charging power DC+/DC- and the BMS are required to be output by the power supply module 550 after the DC-DC conversion.

Optionally, the power supply module 550 can correspond to the power supply module 330, the determining module 320 and the acquiring module 340 in the above-mentioned power conversion apparatus 300, while the self-test module 310 in the power conversion apparatus 300 can be implemented by the control unit 540 and the power unit 530.

FIG. 6 shows a schematic block diagram of a power conversion apparatus 600 of another embodiment of the present application. As shown in FIG. 6, a power conversion apparatus 600 includes a memory 610 and a processor 620, where, the memory 610 is configured for storing an instruction, the processor 620 is configured for reading the instruction and executing the method of aforementioned various embodiments of present application based on the instruction.

Embodiments of the present application also provide a readable storage medium for storing a computer program, the computer program is configured for executing the method of aforementioned various embodiments of the present application.

Those of ordinary skill in the art can realize that, the unit and algorithm step described in conjunction with the embodiments disclosed herein, can implemented by an electronic hardware, or a combination of computer software and electronic hardware. Whether these functions are executed by the hardware or by the soft depends on the specific application of the technical solution and design constraints. Those of ordinary skill in the art can implement the described function by different methods for every specific application, but such supplementation should not be regarded as exceeding the scope of the present application.

Those skilled in the art can clearly understand that, for the convenience and simplicity of description, the specific working process of the above-mentioned described system, device and unit can refer to the corresponding process in the aforementioned method embodiments, and it will not be repeated here.

In several embodiments provided by the present application, it should be understood that, the disclosed system, device and method can be implemented in other manner. For example, the device embodiments described above are only schematic, for example, the division of the unit is merely a division of logic function, the actual implementation can have additional division method, for example multiple units or assemblies can be combined or can be integrate into another system, or some features can be omitted or not implemented. In addition, the mutual interconnection or direct interconnection or communication connect can be indirect interconnection or communication connection via some interfaces, devices or units, they can be electric, mechanical or in other forms.

The unit illustrated as a separate component may be or may on be physically separated, the components shown as a unit may be or may not be a physical unit, namely can be located in one place, or can be distributed to multiple network units. A portion of or all of the units can be chosen according to actual demand to accomplish the purpose of this embodiment.

In addition, each functional unit in each embodiment of the present application can be integrated in one processing unit, they can also be separate physical presence of each unit, two or more units can also be integrated into one unit.

If the function is implemented in manner of software and sold or used as an independent product, it can be stored in one computer readable storage medium. Based on such a understanding, the technical solution of present application can be essentially or the portion which contributes the prior art or a portion of the technical solution can be embodied in software product, the computer software product is stored in one storage medium, including several instructions for one computer apparatus (it may be a personal computer, a server, or a network apparatus, etc.) executing all of or a portion of the steps of method in each embodiment of the present application. The aforementioned storage medium includes: USB flash drive, mobile hard disk drive, read-only memory (ROM), random access memory (RAM), disk or optical disk or several media which can store a program code.

The above are only the specific embodiments of the present application, but the protection scope of the present application is not limited to this, the change or replacement within the technical scope of the present application occur to any person skilled in the art, they all should be covered in the scope of protection of the present application. Therefore, the protection scope of the present application should subject to the protection scope of the claims.

## Claims

1. A power supply control method (200) for a power conversion apparatus, wherein the power conversion apparatus comprises a control unit and a power unit, the power unit is configured to convert a direct current output by a charging power of a charger into a pulse current and charge a power battery, and the control unit is configured to control the power unit to conduct the power conversion, the method comprises:
conducting (S210) a power-on self-test with an auxiliary power of the charger by the power conversion apparatus;
determining (S220) the power supply priority order of a charging power of the charger and the power battery on the basis of a state parameter of the power battery, under the condition that the self-test of the power conversion apparatus succeeds;
determining (S230) the one of the charging power of the charger and the power battery with a higher power supply priority as a current working power of the power conversion apparatus by the power conversion apparatus, wherein the working power is a power supply for the control unit;
powering the control unit according to the current working power.

2. The power supply control method according to claim 1, wherein determining (S230) the power supply priority order of the charging power and the power battery on the basis of the state parameter of the power battery, comprises:
determining the power supply priority order of the charging power and the power battery by the power conversion apparatus on the basis of electric quantity of the power battery.

3. The power supply control method according to claim 2, wherein determining the power supply priority order of the charging power and the power battery by the power conversion apparatus on the basis of the electric quantity of the power battery, comprising:
determining that the power supply priority of the power battery is higher than the power supply priority of the charging power by the power conversion apparatus, under the condition that the electric quantity of the power battery is higher than a first threshold; or
determining that the power supply priority of the power battery is less than the power supply priority of the charging power by the power conversion apparatus, under the condition that the electric quantity of the power battery is less than or equal to the first threshold.

4. The power supply control method according to any one of claims 1 to 3, wherein the method further comprises:
acquiring the auxiliary power by the power conversion apparatus when it is determined that the power conversion apparatus is in a normal working mode, the normal working mode is a working mode in which the charger, the power conversion apparatus and the power battery are interconnected.

5. The power supply control method according to claim 4, wherein acquiring the auxiliary power by the power conversion apparatus when determining that the power conversion apparatus is in the normal working mode, the power conversion apparatus accesses to the auxiliary power, comprising:
acquiring the auxiliary power by the power conversion apparatus when receiving a connection success information sent by the charger.

6. The power supply control method according to any one of claims 1 to 5, wherein before determining the one of the charging power of the charger and the power battery with a higher power supply priority as a current working power of the power conversion apparatus by the power conversion apparatus, the method further comprises:
converting the charging power and/or the power battery into a working power of the power conversion apparatus by the power conversion apparatus.

7. The power supply control method according to any one of claims 1 to 6, wherein the method further comprises:
in an off-line debugging mode of the power conversion apparatus, determining a standard grid or an external direct current power as the current working power of the power conversion apparatus by the power conversion apparatus.

8. The power supply control method according to claim 7, wherein before determining the standard grid as the working power of the power conversion apparatus by the power conversion apparatus, the method further comprises:
converting the standard grid into the working power of the power conversion apparatus by the power conversion apparatus.

9. The power supply control method according to any one of claims 1 to 8, wherein the power conversion apparatus is configured to convert a direct current output by the charging power into a pulse current and charge the power battery.

10. A power conversion apparatus (300), wherein the power conversion apparatus is configured to conduct a power conversion between a charger and a power battery, the power conversion apparatus comprises:
a power unit, configured to convert a direct current output by a charging power of a charging pile into a pulse current and charge a power battery;
a control unit, configured to control the power unit to conduct the power conversion;
a self-test module (310), configured to conduct a power-on self-test by using an auxiliary power of the charger;
a determining module (320), configured to determine the supply priority order of a charging power of the charger and the power battery on the basis of a state parameter of the power battery, under the condition that the self-test of the power conversion apparatus succeeds;
a power supply module (330), configured to determine the one of the charging power of the charger and the power battery with a higher power supply priority as a current working power of the power conversion apparatus, wherein the working power is a power supply for the control unit;
the power supply module (330) is configured to power the control unit according to the current working power.

11. The power conversion apparatus (300) according to claim 10, wherein the power conversion apparatus further comprises:
an acquiring module (340), configured to acquire the auxiliary power when determining that the power conversion apparatus is in a normal working mode, the normal working mode is a working mode in which the charger, the power conversion apparatus and the power battery are interconnected.

12. The power conversion apparatus (300) according to claim 11, wherein the acquiring module (340) is specifically configured to:
acquire the auxiliary power when receiving a connection success information sent by the charger.

13. The power conversion apparatus (300) according to any one of claims 10 to 12, wherein the power conversion apparatus further comprises:
a direct current to direct current, DC-DC, module (350), configured to convert the charging power and/or the power battery into a working power of the power conversion apparatus before the power conversion apparatus determines the one of the charging power of the charger and the power battery with the higher power supply priority as a current working power of the power conversion apparatus,.

14. The power conversion apparatus (300) according to any one of claims 10 to 13, wherein the power supply module (330) is further configured to:
in an off-line debugging mode of the power conversion apparatus, determine a standard grid or an external direct current power as the current working power of the power conversion apparatus.

15. A power conversion apparatus (600), comprising a memory (610) and a processor (620), wherein the memory (610) store instructions which, when executed by the processor, cause the power conversion apparatus (600) to implement the method according to any one of claims 1 to 9.

## Patentansprüche

1. Energieversorgungs-Steuerverfahren (200) für eine Leistungsumwandlungsvorrichtung, wobei die Leistungsumwandlungsvorrichtung eine Steuereinheit und eine Leistungseinheit umfasst, wobei die Leistungseinheit dazu ausgebildet ist, einen durch eine Ladeleistung eines Ladegeräts ausgegebenen Gleichstrom in einen Pulsstrom umzuwandeln und eine Leistungsbatterie zu laden, und die Steuereinheit dazu ausgebildet ist, die Leistungseinheit zu steuern, um die Leistungsumwandlung durchzuführen, wobei das Verfahren umfasst:
Durchführen (S210) eines Einschalt-Selbsttests mit einer Hilfsenergie des Ladegeräts durch die Leistungsumwandlungsvorrichtung;
Bestimmen (S220) der Energieversorgungs-Prioritätsreihenfolge einer Ladeleistung des Ladegeräts und der Leistungsbatterie basierend auf einem Zustandsparameter der Leistungsbatterie, unter der Bedingung, dass der Selbsttest der Leistungsumwandlungsvorrichtung erfolgreich ist;
Bestimmen (S230) der Ladeleistung des Ladegeräts und der Leistungsbatterie mit einer höheren Energieversorgungspriorität als aktuelle Arbeitsleistung der Leistungsumwandlungsvorrichtung durch die Leistungsumwandlungsvorrichtung, wobei die Arbeitsleistung eine Energieversorgung für die Steuereinheit ist;
Versorgen der Steuereinheit mit Energie entsprechend der aktuellen Arbeitsleistung.

2. Energieversorgungs-Steuerverfahren nach Anspruch 1, wobei das Bestimmen (S230) der Energieversorgungs-Prioritätsreihenfolge der Ladeleistung und der Leistungsbatterie basierend auf dem Zustandsparameter der Leistungsbatterie umfasst:
Bestimmen der Energieversorgungs-Prioritätsreihenfolge der Ladeleistung und der Leistungsbatterie durch die Leistungsumwandlungsvorrichtung basierend auf der Strommenge der Leistungsbatterie.

3. Energieversorgungs-Steuerverfahren nach Anspruch 2, wobei das Bestimmen der Energieversorgungs-Prioritätsreihenfolge der Ladeleistung und der Leistungsbatterie durch die Leistungsumwandlungsvorrichtung basierend auf der Strommenge der Leistungsbatterie umfasst:
Bestimmen, dass die Energieversorgungspriorität der Leistungsbatterie höher ist als die Energieversorgungspriorität der Ladeleistung durch die Leistungsumwandlungsvorrichtung, unter der Bedingung, dass die Strommenge der Leistungsbatterie höher als ein erster Schwellenwert ist; oder
Bestimmen, dass die Energieversorgungspriorität der Leistungsbatterie kleiner ist als die Energieversorgungspriorität der Ladeleistung durch die Leistungsumwandlungsvorrichtung, unter der Bedingung, dass die Strommenge der Leistungsbatterie kleiner oder gleich dem ersten Schwellenwert ist.

4. Energieversorgungs-Steuerverfahren nach einem der Ansprüche 1 bis 3, wobei das Verfahren ferner umfasst:
Erfassen der Hilfsenergie durch die Leistungsumwandlungsvorrichtung, wenn bestimmt wird, dass sich die Leistungsumwandlungsvorrichtung in einem normalen Arbeitsmodus befindet, wobei der normale Arbeitsmodus ein Arbeitsmodus ist, in dem das Ladegerät, die Leistungsumwandlungsvorrichtung und die Leistungsbatterie miteinander verbunden sind.

5. Energieversorgungs-Steuerverfahren nach Anspruch 4, wobei das Erfassen der Hilfsenergie durch die Leistungsumwandlungsvorrichtung, wenn bestimmt wird, dass sich die Leistungsumwandlungsvorrichtung in dem normalen Arbeitsmodus befindet, wobei die Leistungsumwandlungsvorrichtung auf die Hilfsenergie zugreift, umfasst:
Erfassen der Hilfsenergie durch die Leistungsumwandlungsvorrichtung, wenn eine von dem Ladegerät gesendete Verbindungserfolgsinformation empfangen wird.

6. Energieversorgungs-Steuerverfahren nach einem der Ansprüche 1 bis 5, wobei vor dem Bestimmen derjenigen von der Ladeleistung des Ladegeräts und der Leistungsbatterie mit einer höheren Energieversorgungspriorität als eine aktuelle Arbeitsleistung der Leistungsumwandlungsvorrichtung durch die Leistungsumwandlungsvorrichtung, das Verfahren ferner umfasst:
Umwandeln der Ladeleistung und/oder der Leistungsbatterie in eine Arbeitsleistung der Leistungsumwandlungsvorrichtung durch die Leistungsumwandlungsvorrichtung.

7. Energieversorgungs-Steuerverfahren nach einem der Ansprüche 1 bis 6, wobei das Verfahren ferner umfasst:
in einem Offline-Debugging-Modus der Leistungsumwandlungsvorrichtung, Bestimmen eines Standardnetzes oder einer externen Gleichstromleistung als aktuelle Arbeitsleistung der Leistungsumwandlungsvorrichtung durch die Leistungsumwandlungsvorrichtung.

8. Energieversorgungs-Steuerverfahren nach Anspruch 7, wobei das Verfahren vor dem Bestimmung des Standardnetzes als die Arbeitsleistung der Leistungsumwandlungsvorrichtung durch die Leistungsumwandlungsvorrichtung das Verfahren ferner umfasst:
Umwandeln des Standardnetzes in die Arbeitsleistung der Leistungsumwandlungsvorrichtung durch die Leistungsumwandlungsvorrichtung.

9. Energieversorgungs-Steuerverfahren nach einem der Ansprüche 1 bis 8, wobei die Leistungsumwandlungsvorrichtung dazu ausgebildet ist, einen durch die Ladeleistung abgegebenen Gleichstrom in einen Pulsstrom umzuwandeln und die Leistungsbatterie zu laden.

10. Leistungsumwandlungsvorrichtung (300), wobei die Leistungsumwandlungsvorrichtung dazu ausgebildet ist, eine Leistungsumwandlung zwischen einem Ladegerät und einer Leistungsbatterie durchzuführen, wobei die Leistungsumwandlungsvorrichtung umfasst:
eine Leistungseinheit, die dazu ausgebildet ist, einen durch eine Ladeleistung einer Ladesäule ausgegebenen Gleichstrom in einen Pulsstrom umzuwandeln und eine Leistungsbatterie zu laden;
eine Steuereinheit, die dazu ausgebildet ist, die Leistungseinheit zu steuern, die Leistungsumwandlung durchzuführen;
ein Selbsttestmodul (310), das dazu ausgebildet ist, unter Verwendung einer Hilfsenergie des Ladegeräts einen Einschalt-Selbsttest durchzuführen;
ein Bestimmungsmodul (320), das dazu ausgebildet ist, die Versorgungsprioritätsreihenfolge einer Ladeleistung des Ladegeräts und der Leistungsbatterie basierend auf einem Zustandsparameter der Leistungsbatterie zu bestimmen, unter der Bedingung, dass der Selbsttest der Leistungsumwandlungsvorrichtung erfolgreich ist;
ein Energieversorgungsmodul (330), das dazu ausgebildet ist, die Ladeleistung des Ladegeräts und der Leistungsbatterie mit einer höheren Energieversorgungspriorität als aktuelle Arbeitsleistung der Leistungsumwandlungsvorrichtung zu bestimmen, wobei die Arbeitsleistung eine Energieversorgung für die Steuereinheit ist;
wobei das Energieversorgungsmodul (330) dazu ausgebildet ist, die Steuereinheit entsprechend der aktuellen Arbeitsleistung mit Energie zu versorgen.

11. Leistungsumwandlungsvorrichtung (300) nach Anspruch 10, wobei die Leistungsumwandlungsvorrichtung ferner umfasst:
ein Erfassungsmodul (340), das dazu ausgebildet ist, die Hilfsenergie zu erfassen, wenn bestimmt wird, dass sich die Leistungsumwandlungsvorrichtung in einem normalen Arbeitsmodus befindet, wobei der normale Arbeitsmodus ein Arbeitsmodus ist, in dem das Ladegerät, die Leistungsumwandlungsvorrichtung und die Leistungsbatterie miteinander verbunden sind.

12. Leistungsumwandlungsvorrichtung (300) nach Anspruch 11, wobei das Erfassungsmodul (340) insbesondere ausgebildet ist zum:
Erfassen der Hilfsenergie, wenn eine von dem Ladegerät gesendete Verbindungserfolgsinformation empfangen wird.

13. Leistungsumwandlungsvorrichtung (300) nach einem der Ansprüche 10 bis 12, wobei die Leistungsumwandlungsvorrichtung ferner umfasst:
ein Gleichstrom-zu-Gleichstrom-, DC-DC-, Modul (350), das dazu ausgebildet ist, die Ladeleistung und/oder die Batterieleistung in eine Arbeitsleistung der Leistungsumwandlungsvorrichtung umzuwandeln, bevor die Leistungsumwandlungsvorrichtung die Ladeleistung des Ladegeräts und der Leistungsbatterie mit der höheren Energieversorgungspriorität als die aktuelle Arbeitsleistung der Leistungsumwandlungsvorrichtung bestimmt.

14. Leistungsumwandlungsvorrichtung (300) nach einem der Ansprüche 10 bis 13, wobei das Energieversorgungsmodul (330) ferner ausgebildet ist zum:
in einem Offline-Debugging-Modus der Leistungsumwandlungsvorrichtung, Bestimmen eines Standardnetzes oder einer externe Gleichstromleistung als aktuelle Arbeitsleistung der Leistungsumwandlungsvorrichtung.

15. Leistungsumwandlungsvorrichtung (600), umfassend einen Speicher (610) und einen Prozessor (620), wobei der Speicher (610) Anweisungen speichert, die, wenn sie von dem Prozessor ausgeführt werden, die Leistungsumwandlungsvorrichtung (600) veranlassen, das Verfahren nach einem der Ansprüche 1 bis 9 auszuführen.

## Revendications

1. Procédé de commande d'alimentation en puissance (200) pour un appareil de conversion de puissance, dans lequel l'appareil de conversion de puissance comprend une unité de commande et une unité de puissance, l'unité de puissance est configurée pour convertir un courant continu émis en sortie par une puissance de charge d'un chargeur selon un courant pulsé et pour charger une batterie de puissance, et l'unité de commande est configurée pour commander l'unité de puissance pour mettre en œuvre la conversion de puissance, le procédé comprend :
la mise en œuvre (S210) d'un autotest d'alimentation en puissance avec une puissance auxiliaire du chargeur par l'appareil de conversion de puissance ;
la détermination (S220) de l'ordre de priorité d'alimentation en puissance d'une puissance de charge du chargeur et de la batterie de puissance sur la base d'un paramètre d'état de la batterie de puissance, sous la condition consistant en ce que l'autotest de l'appareil de conversion de puissance est réussi ;
la détermination (S230) de la puissance de charge du chargeur ou de la batterie de puissance selon celle qui présente une priorité d'alimentation en puissance plus élevée en tant que puissance de travail courante de l'appareil de conversion de puissance par l'appareil de conversion de puissance, dans lequel la puissance de travail est une alimentation en puissance pour l'unité de commande ;
l'alimentation en puissance de l'unité de commande conformément à la puissance de travail courante.

2. Procédé de commande d'alimentation en puissance selon la revendication 1, dans lequel la détermination (S230) de l'ordre de priorité d'alimentation en puissance de la puissance de charge et de la batterie de puissance sur la base du paramètre d'état de la batterie de puissance comprend
la détermination de l'ordre de priorité d'alimentation en puissance de la puissance de charge et de la batterie de puissance par l'appareil de conversion de puissance sur la base d'une quantité électrique de la batterie de puissance.

3. Procédé de commande d'alimentation en puissance selon la revendication 2, dans lequel la détermination de l'ordre de priorité d'alimentation en puissance de la puissance de charge et de la batterie de puissance par l'appareil de conversion de puissance sur la base de la quantité électrique de la batterie de puissance comprend :
la détermination du fait que la priorité d'alimentation en puissance de la batterie de puissance est supérieure à la priorité d'alimentation en puissance de la puissance de charge par l'appareil de conversion de puissance, sous la condition consistant en ce que la quantité électrique de la batterie de puissance est supérieure à un premier seuil ; ou la détermination du fait que la priorité d'alimentation en puissance de la batterie de puissance est inférieure à la priorité d'alimentation en puissance de la puissance de charge par l'appareil de conversion de puissance, sous la condition consistant en ce que la quantité électrique de la batterie de puissance est inférieure ou égale au premier seuil.

4. Procédé de commande d'alimentation en puissance selon l'une quelconque des revendications 1 à 3, dans lequel le procédé comprend en outre :
l'acquisition de la puissance auxiliaire par l'appareil de conversion de puissance lorsqu'il est déterminé que l'appareil de conversion de puissance est dans un mode de fonctionnement normal, le mode de fonctionnement normal est un mode de fonctionnement dans lequel le chargeur, l'appareil de conversion de puissance et la batterie de puissance sont interconnectés.

5. Procédé de commande d'alimentation en puissance selon la revendication 4, dans lequel l'acquisition de la puissance auxiliaire par l'appareil de conversion de puissance lors de la détermination du fait que l'appareil de conversion de puissance est dans le mode de fonctionnement normal, l'appareil de conversion de puissance accède à la puissance auxiliaire, comprenant :
l'acquisition de la puissance auxiliaire par l'appareil de conversion de puissance lors de la réception d'une information de succès de connexion envoyée par le chargeur.

6. Procédé de commande d'alimentation en puissance selon l'une quelconque des revendications 1 à 5, dans lequel, avant la détermination de la puissance de charge du chargeur ou de la batterie de puissance selon celle qui présente une priorité d'alimentation en puissance plus élevée en tant que puissance de travail courante de l'appareil de conversion de puissance par l'appareil de conversion de puissance, le procédé comprend en outre :
la conversion de la puissance de charge et/ou de la batterie de puissance selon une puissance de travail de l'appareil de conversion de puissance par l'appareil de conversion de puissance.

7. Procédé de commande d'alimentation en puissance selon l'une quelconque des revendications 1 à 6, dans lequel le procédé comprend en outre :
dans un mode de débogage hors ligne de l'appareil de conversion de puissance, la détermination d'un réseau standard ou d'une puissance en courant continu externe en tant que puissance de travail courante de l'appareil de conversion de puissance par l'appareil de conversion de puissance.

8. Procédé de commande d'alimentation en puissance selon la revendication 7, dans lequel, avant la détermination du réseau standard en tant que puissance de travail de l'appareil de conversion de puissance par l'appareil de conversion de puissance, le procédé comprend en outre :
la conversion du réseau standard selon la puissance de travail de l'appareil de conversion de puissance par l'appareil de conversion de puissance.

9. Procédé de commande d'alimentation en puissance selon l'une quelconque des revendications 1 à 8, dans lequel l'appareil de conversion de puissance est configuré pour convertir un courant continu émis en sortie par la puissance de charge selon un courant pulsé et pour charger la batterie de puissance.

10. Appareil de conversion de puissance (300), dans lequel l'appareil de conversion de puissance est configuré pour mettre en œuvre une conversion de puissance entre un chargeur et une batterie de puissance, l'appareil de conversion de puissance comprend :
une unité de puissance, configurée pour convertir un courant continu émis en sortie par une puissance de charge d'une pile de charge selon un courant pulsé et pour charger une batterie de puissance ;
une unité de commande, configurée pour commander l'unité de puissance pour mettre en œuvre la conversion de puissance ; un module d'autotest (310), configuré pour mettre en œuvre un autotest d'alimentation en puissance en utilisant une puissance auxiliaire du chargeur ;
un module de détermination (320), configuré pour déterminer l'ordre de priorité d'alimentation d'une puissance de charge du chargeur et de la batterie de puissance sur la base d'un paramètre d'état de la batterie de puissance, sous la condition consistant en ce que l'autotest de l'appareil de conversion de puissance est réussi ;
un module d'alimentation en puissance (330), configuré pour déterminer la puissance de charge du chargeur ou la batterie de puissance selon celle qui présente une priorité d'alimentation en puissance plus élevée en tant que puissance de travail courante de l'appareil de conversion de puissance, dans lequel la puissance de travail est une alimentation en puissance pour l'unité de commande ;
le module d'alimentation en puissance (330) est configuré pour alimenter en puissance l'unité de commande conformément à la puissance de travail courante.

11. Appareil de conversion de puissance (300) selon la revendication 10, dans lequel l'appareil de conversion de puissance comprend en outre :
un module d'acquisition (340), configuré pour acquérir la puissance auxiliaire lors de la détermination du fait que l'appareil de conversion de puissance est dans un mode de fonctionnement normal, le mode de fonctionnement normal est un mode de fonctionnement dans lequel le chargeur, l'appareil de conversion de puissance et la batterie de puissance sont interconnectés.

12. Appareil de conversion de puissance (300) selon la revendication 11, dans lequel le module d'acquisition (340) est spécifiquement configuré pour :
acquérir la puissance auxiliaire lors de la réception d'une information de succès de connexion envoyée par le chargeur.

13. Appareil de conversion de puissance (300) selon l'une quelconque des revendications 10 à 12, dans lequel l'appareil de conversion de puissance comprend en outre :
un module courant continu à courant continu, DC-DC, (350), configuré pour convertir la puissance de charge et/ou la batterie de puissance selon une puissance de travail de l'appareil de conversion de puissance avant que l'appareil de conversion de puissance ne détermine la puissance de charge du chargeur ou la batterie de puissance selon celle qui présente la priorité d'alimentation en puissance plus élevée en tant que puissance de travail courante de l'appareil de conversion de puissance.

14. Appareil de conversion de puissance (300) selon l'une quelconque des revendications 10 à 13, dans lequel le module d'alimentation en puissance (330) est en outre configuré pour :
dans un mode de débogage hors ligne de l'appareil de conversion de puissance, déterminer un réseau standard ou une puissance en courant continu externe en tant que puissance de travail courante de l'appareil de conversion de puissance.

15. Appareil de conversion de puissance (600), comprenant une mémoire (610) et un processeur (620), dans lequel la mémoire (610) stocke des instructions qui, lorsqu'elles sont exécutées par le processeur, forcent l'appareil de conversion de puissance (600) à mettre en œuvre le procédé selon l'une quelconque des revendications 1 à 9.
